# EUROPÄISCHE PATENTANMELDUNG

(11) **EP 1 286 525 A1**
(43) Veröffentlichungstag der Anmeldung: **26.02.2003**
(21) Anmeldenummer: 01120154.8
(22) Anmeldetag: 22.08.2001
(51) Int. Cl.: H04M 3/56, H04M 7/00

(54) **Verfahren zum Einleiten und Steuern einer synchronisierten Surfsitzung zu einer Sprachkonferenz**

(71) Anmelder: SIEMENS AKTIENGESELLSCHAFT, 80333 München (DE)
(72) Erfinder: Le Coent, Yannick, 22700 Louannec (FR); Unger, Stefan, 82008 Unterhaching (DE)

(57) **Zusammenfassung**

Es wird ein Verfahren vorgestellt, durch welches es dem Konferenzleiter (A) auf einfachste Weise ermöglicht wird, zu einer Sprachkonferenz eine parallele Synchronized Surfing Session automatisch einzuleiten. Den Konferenzteilnehmern (B) ist es dann ebenfalls auf einfachste Weise möglich, zur Synchronized Surfing Session automatisch beizutreten. Die Steuerfunktionen werden mittels Java Applets oder Java Scripts, die auf die Datennetzendgeräte (D_{A}, D_{B}) des Konferenzleiters (A) und der Konferenzteilnehmer (B) geladen werden, realisiert.

## Beschreibung

In Telekommunikationsnetzen werden zunehmend sogenannte konvergente Dienste realisiert, d.h. Dienste mit Anteilen sowohl in IP basierten als auch PSTN - Public Switched Telephone Network - basierten Netzen. Ein typischer Dienst dieser Kategorie ist Click-to-Dial. Damit ist ein konvergenter Dienst gemeint, der es ermöglicht, über das Internet die Anforderung eines Rückrufs, welcher dann über das PSTN erfolgt, zu initialisieren. Diese Art von Diensten wird so realisiert, daß ein spezieller Server die Logik enthält, welche die entsprechenden Informationen zur Aktivierung des Click-to-Dial-Dienstes vom Initiator sammelt und dann eine spezielle Steueranfrage an einen anderen Server sendet, der die Fähigkeit besitzt, PSTN-Vermittlungsstellen zum Aufbau einer Telefonverbindung anzusteuern. Dabei kommen Verfahren auf Basis der HTML - Hyper Text Markup Language - und Servlet Technologie zum Einsatz.

In analoger Weise existiert ein Dienst Click-to-Conference CtC. Der CtC-Dienst erlaubt es dem Nutzer, via Internet eine Telefonkonferenz im PSTN zu initialisieren und auch zu steuern. Die Steuerung erfolgt beispielsweise in der Art, daß sowohl der Konferenzinitiator als auch die weiteren Konferenzteilnehmer an ihren PCs Statusinformationen bezüglich aller Teilnehmer der Konferenz sehen können und/oder der Konferenzinitiator weitere Teilnehmer zu einer bestehenden Konferenz hinzufügen bzw. Teilnehmer aus der aktuellen Konferenz herausnehmen kann. Die Anzeige der Statusinformation der Konferenzteilnehmer sowie die Konferenzsteuerung - letzteres ist nur für den Konferenzinitiator möglich - erfolgt mittels Java Applet, welches in den Internet Browser aller Konferenzteilnehmer geladen wird. Voraussetzung für Statusinformation und Steuerung der Telefonkonferenz via Internet ist natürlich eine aktive Verbindung zum Internet.

Ein weiterer Dienst im Internet ist Synchronized Surfing.

Mit Synchronized Surfing wird das gemeinsame Ansehen von HTML Seiten durch mindestens zwei Nutzer, die eine aktive Verbindung zum Internet haben, bezeichnet. Gemeinsam bedeutet dabei, daß die Internet Browser der teilnehmenden Nutzer dieselbe HTML Seite anzeigen. Um Synchronized Surfing zu realisieren bedarf es einer Instanz, welche die anzuzeigenden HTML Seite koordiniert, so daß die aktuell ausgewählte Seite in alle Internet Browser der Teilnehmer der Synchronized Surfing Session geladen wird. Ein zentraler Synchronized Surfing Server koordiniert die anzuzeigenden HTML Seiten. Alle Teilnehmer der Synchronized Surfing Session melden sich an diesem Server an. Jede HTTP Anfrage eines Teilnehmers geht über diesen Synchronized Surfing Server, und jede Antwort auf die HTTP Anfrage - typischerweise eine neue HTML Seite - geht über den Synchronized Surfing Server an den Internet Browser des anfragenden Teilnehmers. Alle anderen Teilnehmer bekommen die neue HTML Seite direkt vom Synchronized Surfing Server. Dazu ist das Laden eines kleinen Programms in den Internet Browser der Teilnehmer erforderlich, welches die Kommunikation zwischen Internet Browser und Synchronized Surfing ermöglicht.

Wird ein Click-to-Conference Dienst mit Synchronized Surfing kombiniert, so besteht eine Aufgabe darin, zur bestehenden, mittels Click-to-Conference verwalteten Telefonkonferenz die Synchronized Surfing Session automatisiert einzuleiten und zu koordinieren. Zusätzlich zu den Eigenschaften einer herkömmlichen Synchronized Surfing Session ist eine Steuerung erforderlich, welche die Administrator-Funktion des Konferenzleiters unterstützt. Beispielsweise sollte nur der Konferenzleiter die jeweiligen HTML Seiten vorgeben können.

Die der vorliegenden Erfindung zugrundeliegende Aufgabe besteht darin, ein Verfahren zum Einleiten und Koordinieren einer Synchronized Surfing Session zu einer Sprachkonferenz anzugeben.

Diese Aufgabe wird ausgehend vom Oberbegriff des Patentanspruchs 1 durch dessen kennzeichnende Merkmale gelöst.

Ein wesentlicher Vorteil des erfindungsgemäßen Verfahrens besteht darin, daß es dem Konferenzleiter einer Sprachkonferenz durch eine einfache Aktion, z.B. Klicken auf eine hierfür vorgesehene Schaltfläche auf einer Internetanwendung, ermöglicht wird, automatisch eine parallele Synchronized Surfing Session zur Sprachkonferenz aufzubauen. Ebenfalls automatisch wird dabei allen Konferenzteilnehmern, die dann ebenfalls Teilnehmer der Synchronized Surfing Session sind, als erste Internetseite eine spezielle, vom Konferenzleiter ausgewählte Internetseite angezeigt.

Ein weiterer wichtiger Vorteil besteht darin, daß durch den Einsatz von Java Applets lediglich ein Java-fähiger Internet Browser benötigt und die Installation spezieller Software auf den Datennetzendgeräten des Konferenzleiters und der Konferenzteilnehmer vermieden wird - Anspruch 7. Dabei wird werden die Java Applets dynamisch gesteuert, Schaltflächen und Informationsfenster erscheinen angepaßt an den Status der Synchronized Surfing Session. Weiterhin werden die Rollen der Nutzer - Konferenzleiter oder Konferenzteilnehmer - berücksichtigt, beispielsweise wird nur dem Konferenzleiter die Schaltfläche zum Einleiten und Beenden der Synchronized Surfing Session angezeigt. Dadurch werden Fehleingaben vermieden, und es wird sichergestellt, daß die Synchronized Surfing Session nur durch den Konferenzleiter gesteuert wird - Anspruch 6.

Vorteilhaft ist es möglich, die Konferenzleiter-Berechtigungen zum Steuern der Synchronized Surfing Session durch den Konferenzleiter an einen der Konferenzteilnehmer zu übertragen, um beispielsweise einem der Konferenzteilnehmer während der laufenden Synchronized Surfing Session die Steuerung und Auswahl der gemeinsam zu betrachtenden Internetinhalte zu ermöglichen - Anspruch 5.

Falls Konferenzleiter und/oder Konferenzteilnehmer nur über einen analogen Telefonanschluß ohne separaten Zugang zum Datennetz verfügen, wird der Telefonanschluß zur Einwahl in das Datennetz verwendet. Vorteilhaft wird dann die Sprachverbindung über die Datennetzverbindung realisiert, z.B. unter Verwendung des Voice over IP Mechanismus - Ansprüche 9 und 10.

Weitere vorteilhafte Ausgestaltungen der Erfindung sind den Unteransprüchen zu entnehmen.

Im folgenden wird das erfindungsgemäße Verfahren anhand von drei Zeichnungen näher erläutert. Dabei werden folgende Abkürzungen und Bezeichnungen verwendet:
- Applet:: kleines Programm, das in einen Internet Browser geladen wird und spezielle Zusatzfunktionen realisiert
- CtC:: Click-to-Conference Dienst, Dienst für Internet-gesteuerte Sprachkonferenz
- CtC Server C:: Web Server, der HTML Seiten zum Abruf bereitstellt und die Steuerlogik für den CtC Dienst enthält
- CtC Applet:: Java Applet zur Steuerung der CtC Sprachkonferenz, ausgestattet mit Mitteln zum Einleiten einer Synchronized Surfing Session
- SyS:: Synchronized Surfing, Verfahren zum gemeinsamen Betrachten von Internetinhalten
- SyS Server S:: Web Server, der die Verteilung von HTML Seiten an die Teilnehmer einer SyS Session koordiniert und die Steuerlogik für den SyS Dienst enthält
- SyS Applet:: Java Applet zur Steuerung der SyS Session
- PC: Personalcomputer
- HTTP: Hyper Text Transfer Protocol, Übertragungsprotokoll für Internetinhalte
- HTML: Hyper Text Markup Language, Beschreibungssprache für Internetinhalte
- PSTN: Public Switched Telephone Network, öffentliches leitungsvermitteltes Telefonnetz

Die Figuren zeigen:

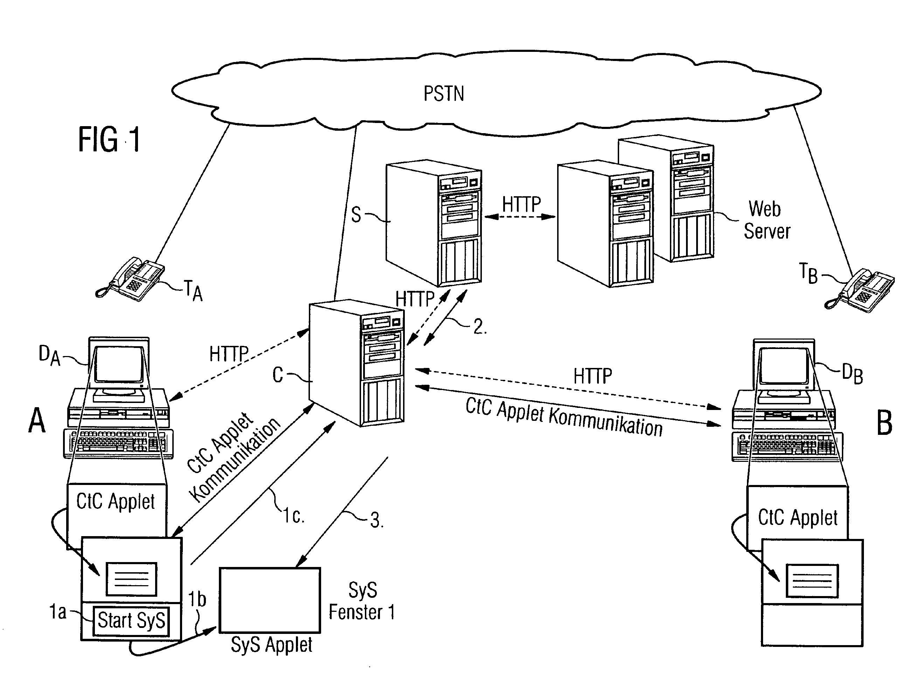

- Figur 1: eine schematische Darstellung eines Kommunikationsnetzes mit einem CtC Server C, einem SyS Server S, einem ersten Sprachendgerät T_{A} mit zugeordnetem PC D_{A} eines Konferenzleiters A einer CtC Sprachkonferenz und einem zweiten Sprachendgerät T_{B} mit zugeordnetem PC D_{B} eines Konferenzteilnehmers B der CtC Sprachkonferenz sowie die Abläufe zum Einleiten einer der CtC Sprachkonferenz zugeordneten SyS Session durch den Konferenzleiter A,

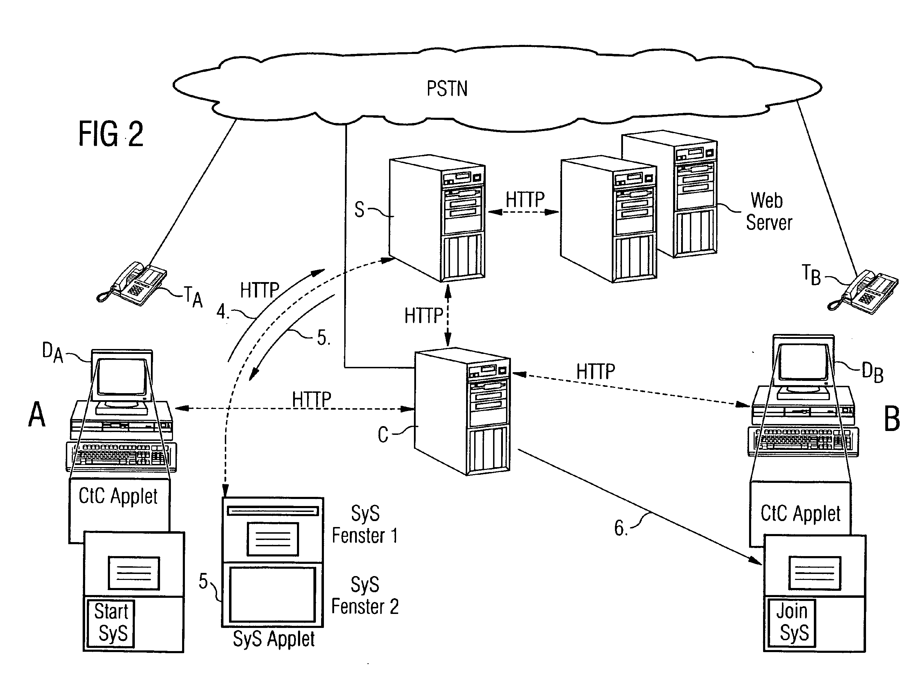

- Figur 2: eine schematische Darstellung der Abläufe zum Einbinden des ersten PC D_{A} des Konferenzleiters A in die durch den SyS Server S verwaltete SyS Session und

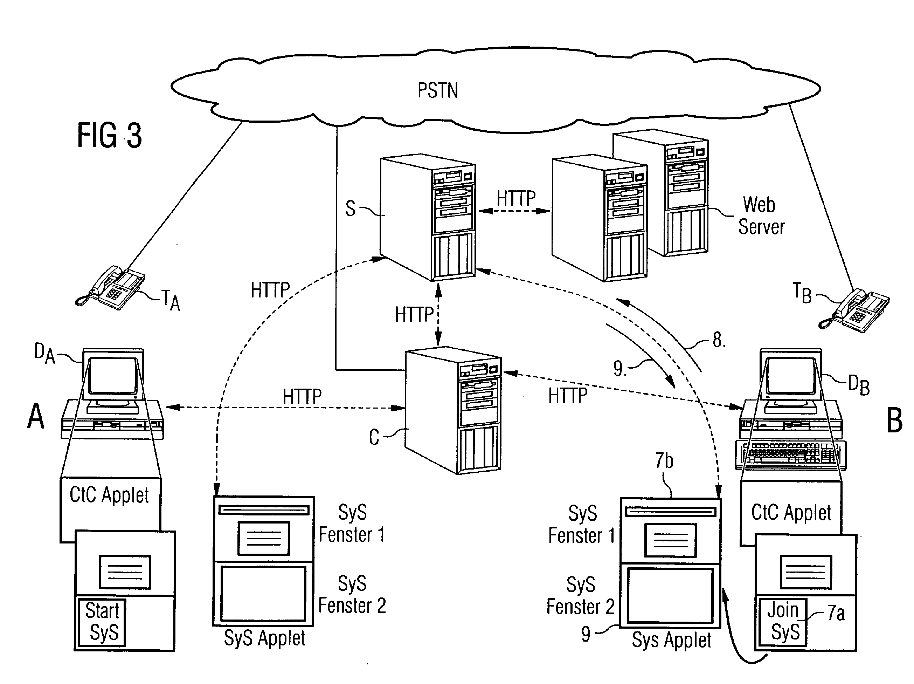

- Figur 3: eine schematische Darstellung der Abläufe zum Beitritt des zweiten PC D_{B} des Konferenzteilnehmers B zu der durch den Konferenzleiter A eingeleiteten SyS Session.

Die PC D_{A}, D_{B} enthalten einen Internet Browser, der das Laden von Java Applets zuläßt. Anfangs ist in die Internet Browser beider PC D_{A}, D_{B} jeweils ein CtC Applet geladen, welches eine HTTP Verbindung zum CtC Server C aufrecht erhält.

Das CtC Applet wird in den Internet Browser der PC D_{A}, D_{B} geladen und kommuniziert mit dem CtC Server C mittels HTTP. Das CtC Applet ist ein kleines Programm, das eine eigene grafische Nutzeroberfläche auf dem ersten PC D_{A} des Konferenzleiters A und dem zweiten PC D_{B} der Konferenzteilnehmer B darstellt. Damit können der Konferenzleiter A und die Konferenzteilnehmer B die CtC Session steuern, z.B. Beitreten zur Sprachkonferenz oder Starten oder Beitreten zu einer SyS Session. Das CtC Applet bzw. die Nutzeroberfläche für Konferenzleiter A und Konferenzteilnehmer B sind unterschiedlich. Im vorliegenden Ausführungsbeispiel ist das CtC Applet ein Java Applet.

Der CtC Server C wird mittels HTTP von einem Internet Browser kontaktiert und stellt HTML Inhalte zum Abruf bereit. Der CtC Server C enthält die Steuerlogik für den CtC Konferenzdienst. Die vorgehaltenen HTML Inhalte erlauben die Eingabe von erforderlichen Daten durch den Konferenzleiter A, z.B. Rufnummern der Konferenzteilnehmer B, sowie die Steuerung von Diensten, z.B. sofortiges Starten der Konferenz oder Buchen für einen späteren Zeitpunkt. Der Server enthält auch ein CtC Applet, das mittels HTTP an die PC D_{A}, D_{B} gesendet werden kann. Der CtC Server C verfügt über eine Schnittstelle zum SyS Server S zum Initiieren einer SyS Session. Der CtC Server ist über eine geeignete Schnittstelle mit einer Vermittlungseinheit des PSTN - nicht dargestellt - verbunden, um vermittlungsspezifische Funktionen steuern und so den Aufbau und die Steuerung der Telefonkonferenz zu ermöglichen.

Der SyS Server S wird mittels HTTP von einem Internet Browser kontaktiert. Seine Aufgabe besteht darin, die HTTP Signalisierung aller Konferenzteilnehmer B und des Konferenzleiters A einer SyS Session zu koordinieren. Dabei gibt der Konferenzleiter A HTML Seiten vor. Der SyS Server S leitet die HTTP Anfrage an den Web Server, der die angeforderte HTML Seite vorhält, weiter und bekommt diese geliefert. Diese HTML Seite sendet er dann an alle Konferenzteilnehmer B und den Konferenzleiter A der SyS Sitzung weiter. Die Konferenzteilnehmer B sind passive Teilnehmer der Sitzung, d.h. sie können keine eigenen HTML Seiten vorgeben, sondern nur die HTML Seiten ansehen, die der Konferenzleiter A auswählt. Da mittels HTTP das Senden von HTML Seiten vom Server zum Internet Browser nicht möglich ist, muß der SyS Server S an die PC D_{A}, D_{B} des Konferenzleiters A und aller Konferenzteilnehmer B der SyS Sitzung ein SyS Applet senden. Zwischen dem SyS Server S und dem SyS Applet besteht ein Kommunikationskanal, über welchen Daten vom SyS Server S an die SyS Applets auf den PC D_{A}, D_{B} gesendet werden können. Der SyS Server S enthält eine Servicelogik für den unterstützten Dienst, z.B. Konferenz. Diese Logik steuert die unterschiedlichen Funktionen für Konferenzleiter A und Konferenzteilnehmer B.

Das SyS Applet wird in den Internet Browser der PC D_{A}, D_{B} geladen und kommuniziert mit dem SyS Server S mittels HTTP. Das SyS Applet ist ein kleines Programm, das eine eigene grafische Nutzeroberfläche auf den PC D_{A}, D_{B} des Konferenzleiters A und der Konferenzteilnehmer B darstellt. Damit können der Konferenzleiter A und die Konferenzteilnehmer B die SyS Session steuern, z.B. Vorgeben einer neuen URL, Verlassen oder Beenden der SyS Session. Das SyS Applet bzw. die Nutzeroberfläche für Konferenzleiter A und Konferenzteilnehmer B sind unterschiedlich. Im vorliegenden Ausführungsbeispiel ist das SyS Applet ein Java Applet.

Im folgenden sind die mit 1.9 bezeichneten Vorgänge erläutert, die zwischen den genannten Einrichtungen ablaufen, um eine CtC Sprachkonferenz zwischen einem Konferenzleiter A und mindestens einem Konferenzteilnehmer B zu einer Sprachkonferenz mit paralleler SyS Session zwischen dem Konferenzleiter A und dem Konferenzteilnehmer B oder den Konferenzteilnehmern B zu erweitern. Diese Vorgänge werden ausgelöst durch den Konferenzleiter A der CtC Sprachkonferenz. Aktivieren einer im CtC Applet des Konferenzleiters A eingeblendete Schaltfläche durch den Konferenzleiter A löst folgende Schritte aus:
Fig. 1:
   1. Der Konferenzleiter A einer Telefonkonferenz, die im öffentlichen Fernsprechnetz PSTN vermittelt wird, befindet sich in einer Telefonkonferenz mit mindestens einem Teilnehmer B und kann diese Telefonkonferenz über ein Steuerfenster eines CtC Applets, welches auf seinem PC D_{A} abläuft, steuern und überwachen. Das Steuerfenster enthält eine Schaltfläche zur Aktivierung für SyS, nämlich die Schaltfläche "Start SyS". Diese Schaltfläche ist nur im Steuerfenster des Konferenzleiters A sichtbar. Der Konferenzleiter A betätigt die Schaltfläche "Start SyS" und initiiert damit den Aufbau einer SyS Session parallel zu der Telefonkonferenz - Vorgang 1a.
      Auf dem PC D_{A} des Konferenzleiters A wird ein neues Anwendungsfenster - SyS Fenster 1 - erzeugt - Vorgang 1b.
      Während der Initialisierung des SyS Fenster 1 wird von diesem eine HTTP Anfrage mit der Indikation "Starte SyS" an den CtC Server gesendet - Vorgang 1c. Diese Anfrage kann eine Start-Internetadresse enthalten, d.h. die Adresse der Internetseite, die zuerst gemeinsam betrachtet werden soll.
   2. Der CtC Server fordert beim SyS Server S die Erstellung einer SyS Session an. Der SyS Server S sendet nach erfolgreicher Initialisierung der SyS Session zwei Identifikationen an den CtC Server, eine für den Konferenzleiter A und eine für alle anderen Teilnehmer B. Anhand der unterschiedlichen Identifikationen können dem Konferenzleiter A und den Teilnehmern B unterschiedliche Funktionen zugeteilt werden. In einer vorteilhaften Ausgestaltung hat nur der Konferenzleiter A die erforderlichen Rechte, neue Internetseiten aufrufen, während die Eingabezeilen der SyS Applets der Teilnehmer B deaktiviert werden. In einer weiteren Ausgestaltung hat nur der Konferenzleiter A die erforderlichen Rechte, die SyS Session zu beenden.
      Die Start-Internetadresse wird durch den CtC Server an den SyS Server S übergeben. Anhand der Start-Internetadresse wird durch den SyS Server S die Start-Internetseite geladen.
   3. Der CtC Server gibt an das SyS Fenster 1 auf dem PC D_{A} des Konferenzleiters A die Identifikation des Konferenzleiters A sowie die Internetadresse des SyS Server S als Antwort auf die Anfrage 1c zurück.
Fig. 2:
   4. Das SyS Fenster 1 auf dem PC D_{A} des Konferenzleiters A sendet eine HTTP Anfrage mit der Identifikation des Konferenzleiters A an den SyS Server S. Anhand der Identifikation wird der Konferenzleiter A durch den SyS Server S automatisch mit der durch auf die Anforderung des CtC Servers erstellten SyS Session verbunden.
   5. Als Antwort sendet der SyS Server S das SyS Applet an den PC D_{A} des Konferenzleiters A. Dieses wird in den Internet Browser auf dem PC D_{A} des Konferenzleiters A geladen und erzeugt ein weiteres Fenster - SyS Fenster 2. Das SyS Fenster 2 ist der Ansichtsbereich der SyS Session, enthält also die gemeinsam zu betrachtenden Internetseiten. SyS Fenster 1 und SyS Fenster 2 werden kombiniert, d.h. in einem gemeinsamen Fenster dargestellt. Durch das SyS Applet besteht jetzt ein Kommunikationskanal zwischen dem Internet Browser auf dem PC D_{A} des Konferenzleiters A und dem SyS Server S. Der SyS Server S kann somit jederzeit neue Internetseiten an den Internet Browser auf dem PC D_{A} des Konferenzleiters A senden. Gleichzeitig erfolgt die Steuerung der SyS Session über diesen Kanal, beispielsweise das Aufrufen neuer Internetseiten oder das Beenden der SyS Session.
   6. Der CtC Server sendet an die Teilnehmer B der Telefonkonferenz die für die Teilnehmer B vorgesehene Identifikation zur Teilnahme an der SyS Session sowie die Internetadresse des SyS Server S. Das Senden erfolgt über den Kommunikationskanal zwischen CtC Server und CtC Applet. Mit Empfang der Identifikation wird das CtC Fenster aktualisiert, und eine Schaltfläche "Join SyS" - der SyS Session beitreten - wird dargestellt.
Fig. 3:
   7. Ein Teilnehmer B betätigt die Schaltfläche "Join SyS" - Vorgang 7a. Auf dem PC D_{B} des Teilnehmers B wird daraufhin ein neues Anwendungsfenster - SyS Fenster 1 - erzeugt - Vorgang 7b.
   8. Das SyS Fenster 1 auf dem PC D_{B} des Teilnehmers B sendet eine HTTP Anfrage mit der Identifikation des Teilnehmers B an den SyS Server S. Anhand der Identifikation wird der Teilnehmer B durch den SyS Server S automatisch mit der durch auf die Anforderung des CtC Servers hin erstellten SyS Session verbunden.
   9. Als Antwort sendet der SyS Server S das SyS Applet an den PC D_{B} des Konferenzteilnehmers B. Dieses wird in den Internet Browser auf dem PC D_{B} des Konferenzteilnehmers B geladen und erzeugt ein weiteres Fenster - SyS Fenster 2. Das SyS Fenster 2 ist der Ansichtsbereich der SyS Session, enthält also die gemeinsam zu betrachtenden Internetseiten. SyS Fenster 1 und SyS Fenster 2 werden kombiniert, d.h. in einem gemeinsamen Fenster dargestellt. Durch das SyS Applet besteht jetzt ein Kommunikationskanal zwischen dem Internet Browser auf dem PC D_{B} des Konferenzteilnehmers B und dem SyS Server S. Der SyS Server S kann somit jederzeit neue Internetseiten an den Internet Browser auf dem PC D_{B} des Konferenzteilnehmers B senden. Gleichzeitig erfolgt die Steuerung der SyS Session über diesen Kanal, beispielsweise der Austritt des Teilnehmers B aus der SyS Session.

Die Schritte 6..9 sind für jeweils vom jedem Teilnehmer B der Telefonkonferenz durchzuführen. Anschließend sind alle Teilnehmer B der CtC Sprachkonferenz auch Teilnehmer der parallelen SyS Session.

Nunmehr besteht parallel zur CtC Sprachkonferenz eine SyS Session zwischen dem Konferenzleiter A und allen Konferenzteilnehmern B. Nunmehr kann der Konferenzleiter A den Konferenzteilnehmern B beispielsweise ein Internet-Angebot vorstellen oder einer Internet-unterstützte Präsentation vorführen.

Aus Sicht des Konferenzleiters A und aller Konferenzteilnehmer B erfolgt der Aufbau der zusätzlichen SyS Session mittels einfacher Aktion, im Ausführungsbeispiel durch Betätigen einer Schaltfläche.

Die Erfindung ist nicht auf das Ausführungsbeispiel beschränkt. Insbesondere ist in der Regel von mehr als einem Konferenzteilnehmer B auszugehen.

Weiters kann beispielsweise die Anbindung der Sprachendgeräte T_{A}, T_{B} unabhängig voneinander mittels Voice over IP erfolgen. Dann ist zusätzlich zu den dargestellten Einrichtungen ein Voice over IP Gateway erforderlich - nicht dargestellt.

Anstelle der beschriebenen Java Applets - SyS Applet, CtC Applet - können auch Java Scripts eingesetzt werden.

In einer vorteilhaften Ausprägung des erfindungsgemäßen Verfahrens ist es möglich, die Berechtigungen zur Beeinflussung der Synchronized Surfing Session des Konferenzleiters A während der laufenden Synchronized Surfing Session an einen der Konferenzteilnehmer B zu übertragen. Zu diesem Zweck werden dann die beschriebenen Java Applets - SyS Applet, CtC Applet -, der CtC Server C und der SyS Server S angepaßt, um diese Übertragung der Berechtigungen durchführen zu können.

## Patentansprüche

1. Verfahren zum Einleiten und Steuern einer Synchronized Surfing Session zu einer Sprachkonferenz, ausgehend von einer bestehenden Sprachkonferenz im Sprachnetz (PSTN) mit einem ersten Sprachendgerät (T_{A}) und mindestens einem weiteren Sprachendgerät (T_{B}), wobei zusätzlich ein dem ersten Sprachendgerät (T_{A}) zugeordnetes erstes Datennetzendgerät (D_{A}) und mindestens ein jeweils einem der weiteren Sprachendgeräte (T_{B}) zugeordnetes weiteres Datennetzendgerät (D_{B}) mit einem Datennetz verbunden sind,
**dadurch gekennzeichnet,**
- **daß** durch eine Aktion am ersten Datennetzendgerät (D_{A}) der Aufbau einer durch eine Session ID und eine Server ID eines Synchronized Surfing Servers (S) bezeichneten Synchronized Surfing Session eingeleitet wird,
- **daß** das erste Datennetzendgerät (D_{A}) mit der durch die Session ID und die Server ID bezeichneten Synchronized Surfing Session verbunden wird,
- **daß** die weiteren Datennetzendgeräte (D_{B}) durch eine Aktion am jeweiligen Datennetzendgerät (D_{B}) mit der durch die Session ID bezeichneten Synchronized Surfing Session verbunden werden,
- **daß** die Synchronized Surfing Session durch das erste Datennetzendgerät (D_{A}) gesteuert wird.

2. Verfahren nach Anspruch 1,
**dadurch gekennzeichnet,**
- **daß** die Sprachendgeräte (T_{A}, T_{B}) einer mit dem Dienst Click-to-Conference erstellten Sprachkonferenz zugeordnet sind, wobei die Sprachkonferenz durch eine erste auf dem erste Datennetzendgerät (D_{A}) ablaufende Anwendung (CtC Applet) gesteuert und durch einen Datennetz-Server (C) koordiniert wird,
- **daß** durch die erste auf dem ersten Datennetzendgerät (D_{A}) ablaufende Anwendung (CtC Applet) die Synchronized Surfing Session eingeleitet und durch eine zweite auf dem ersten Datennetzendgerät (D_{A}) ablaufende Anwendung (SyS Applet) gesteuert wird,
- **daß** durch eine erste auf den weiteren Datennetzendgeräten (D_{B}) ablaufende Anwendung (CtC Applet), durch welche die Teilnahme an der Sprachkonferenz gesteuert wird, das Vorhandensein der Synchronized Surfing Session angezeigt und der Beitritt zur Synchronized Surfing Session ermöglicht wird,
- **daß** durch eine zweite auf den weiteren Datennetzendgeräten (D_{B}) ablaufende Anwendung (SyS Applet) die Teilnahme an der Synchronized Surfing Session gesteuert wird.

3. Verfahren nach einem der Ansprüche 1 oder 2,
**dadurch gekennzeichnet,**
**daß** nur an dem die Synchronized Surfing Session steuernden Datennetzendgerät (D_{A}) gemeinsam zu betrachtende Datennetzinhalte vorgegeben werden können.

4. Verfahren nach einem der Ansprüche 1 bis 3,
**dadurch gekennzeichnet,**
**daß** nur an dem die Synchronized Surfing Session steuernden Datennetzendgerät (D_{A}) die Synchronized Surfing Session beendet werden kann.

5. Verfahren nach einem der Ansprüche 1 bis 4,
**dadurch gekennzeichnet,**
**daß** die Berechtigung zur Vorgabe der zu gemeinsam zu betrachtende Datennetzinhalte und/oder die Berechtigung zum Beenden der Synchronized Surfing Session vom die Synchronized Surfing Session steuernden Datennetzendgerät (D_{A}) an eines der weiteren Datennetzendgeräte (D_{B}) vorübergehend oder bis zum Ende der Synchronized Surfing Session übertragen werden kann.

6. Verfahren nach einem der Ansprüche 1 bis 5,
**dadurch gekennzeichnet,**
**daß** durch die erste (CtC Applet) und zweite (SyS Applet) auf den Datennetzendgeräten (D_{A}, D_{B}) ablaufende Anwendung zur Steuerung der Synchronized Surfing Session bzw. zur Steuerung der Teilnahme an der Synchronized Surfing Session benötigte Mittel angepaßt an die Rolle - Konferenzleiter (A) oder Konferenzteilnehmer (B) - von Nutzern (A, B) und angepaßt an den Status der Synchronized Surfing Session bereitgestellt werden.

7. Verfahren nach einem der Ansprüche 1 bis 6,
**dadurch gekennzeichnet,**
**daß** für die erste und zweite (SyS Applet) auf den Datennetzendgeräten (D_{A}, D_{B}) ablaufende Anwendung Java Applets oder Java Scripts vorgesehen sind.

8. Verfahren nach einem der Ansprüche 1 bis 7,
**dadurch gekennzeichnet,**
- **daß** alle Sprachendgeräte (T_{A}, T_{B}) analoge oder digitale Telefone sind,
- **daß** die Verbindung zwischen den Sprachendgeräten (T_{A}, T_{B}) eine Verbindung im leitungsvermittelnden Telefonnetz (PSTN) ist.

9. Verfahren nach einem der Ansprüche 1 bis 7,
**dadurch gekennzeichnet,**
- **daß** mindestens ein Sprachendgerät (T_{A}, T_{B}) ein analoges oder digitales Telefon ist,
- **daß** mindestens ein Sprachendgerät (T_{A}, T_{B}) ein Datennetzendgerät (D_{A}, D_{B}) mit Telefonie-Funktion ist,
- **daß** die Verbindung zwischen den Sprachendgeräten (T_{A}, T_{B}) zu einem Teil eine Verbindung im leitungsvermittelnden Telefonnetz (PSTN) ist und zu einem anderen Teil eine Datennetzverbindung ist, wobei das Datennetz und das Telefonnetz (PSTN) über eine Gateway-Einrichtung verbunden sind.

10. Verfahren nach einem der Ansprüche 1 bis 7,
**dadurch gekennzeichnet,**
- **daß** alle Sprachendgeräte (T_{A}, T_{B}) Datennetzendgeräte (D_{A}, D_{B}) mit Telefonie-Funktion sind,
- **daß** die Verbindung zwischen den Sprachendgeräten (T_{A}, T_{B}) eine Datennetzverbindung ist.

11. Verfahren nach einem der Ansprüche 1 bis 10,
**dadurch gekennzeichnet,**
**daß** als Datennetz das Internet vorgesehen ist.

12. Anwendung (CtC Applet), die zum Ablauf auf einem Datennetzendgerät (D_{A}, D_{B}) vorgesehen ist, wobei
- die Anwendung (CtC Applet) Mittel zur Bereitstellung einer grafischen Bedienoberfläche aufweist,
- die Anwendung (CtC Applet) Mittel zur Steuerung einer Click-to-Conference Sprachkonferenz aufweist,
- die Anwendung (CtC Applet) Mittel zur Bereitstellung der Steuerungsmittel angepaßt an die Rolle - Konferenzleiter (A) oder Konferenzteilnehmer (B) - von Nutzern (A, B) aufweist,
- die Anwendung (CtC Applet) Mittel zum Einleiten einer Synchronized Surfing Session aufweist.

13. Anwendung (CtC Applet) nach Anspruch 12,
**dadurch gekennzeichnet,**
**daß** die Anwendung (CtC Applet) ein Java Applet oder eine Java Script Anwendung ist.

14. Anwendung (SyS Applet), die zum Ablauf auf einem Datennetzendgerät (D_{A}, D_{B}) vorgesehen ist, wobei
- die Anwendung (SyS Applet) Mittel zur Bereitstellung einer grafischen Bedienoberfläche aufweist,
- die Anwendung Mittel (SyS Applet) zur Steuerung einer Synchronized Surfing Session aufweist,
- die Anwendung Mittel (SyS Applet) zur Bereitstellung der Steuerungsmittel angepaßt an die Rolle - Konferenzleiter (A) oder Konferenzteilnehmer (B) - von Nutzern (A, B) aufweist.

15. Anwendung (SyS Applet) nach Anspruch 14,
**dadurch gekennzeichnet,**
**daß** die Anwendung (SyS Applet) ein Java Applet oder eine Java Script Anwendung ist.

16. Datennetz-Server (C) eines Datennetzes, der Informationen zum Abruf durch ein oder mehrere Datennetz-Endgeräte (D_{A}, D_{B}) bereitstellt,
**dadurch gekennzeichnet,**
- **daß** der Datennetz-Server (C) eine erste Anwendung (CtC Applet) zur Übertragung an ein oder mehrere Datennetz-Endgeräte (D_{A}, D_{B}) bereithält,
- **daß** der Datennetz-Server (C) Mittel zur Steuerung einer Click-to-Dial Sprachkonferenz in einem Sprachnetz (PSTN) aufweist,
- **daß** der Datennetz-Server (C) Mittel zur Steuerung des Aufbaus einer Synchronized Surfing Session mit dem Datennetz-Endgerät (D_{A}) und dem weiteren Datennetzendgerät (D_{B}) bzw. den weiteren Datennetzendgeräten (D_{B}) durch einen Synchronized Surfing Server (S) aufweist,
- **daß** der Datennetz-Server (C) Mittel zur Bereitstellung von Funktionen angepaßt an die Rolle - Konferenzleiter (A) oder Konferenzteilnehmer (B) - von Nutzern (A, B) aufweist.

17. Synchronized Surfing Server (S) eines Datennetzes, der Informationen zum Abruf durch ein oder mehrere Datennetz-Endgeräte (D_{A}, D_{B}) und Mittel zur Verwaltung von Synchronized Surfing Sessions bereitstellt,
**dadurch gekennzeichnet,**
- **daß** der Synchronized Surfing Server (S) eine zweite Anwendung (SyS Applet) zur Übertragung an ein oder mehrere Datennetz-Endgeräte (D_{A}, D_{B}) bereithält,
- **daß** der Synchronized Surfing Server (S) Steuerungsmittel aufweist, durch die ein Datennetz-Server (C) den Aufbau einer Synchronized Surfing Session mit dem Datennetz-Endgerät (D_{A}) und dem weiteren Datennetzendgerät (D_{B}) bzw. den weiteren Datennetzendgeräten (D_{B}) durch den Synchronized Surfing Server (S) steuern kann.

18. Kommunikationsanordnung zum Einleiten und Steuern einer Synchronized Surfing Session zu einer Sprachkonferenz, ausgehend von einer bestehenden Sprachkonferenz im Sprachnetz (PSTN) mit einem ersten Sprachendgerät (T_{A}) und mindestens einem weiteren Sprachendgerät (T_{B}), wobei zusätzlich ein dem ersten Sprachendgerät (T_{A}) zugeordnetes erstes Datennetzendgerät (D_{A}) und mindestens ein jeweils einem der weiteren Sprachendgeräte (T_{B}) zugeordnetes weiteres Datennetzendgerät (D_{B}) mit einem Datennetz verbunden sind,
- mit einem Datennetz-Server (C) zum Bereitstellen von Datennetz-Inhalten, der Mittel zur Steuerung des Aufbaus einer Click-to-Conference Sprachkonferenz und Mittel zur Steuerung des Aufbaus einer Synchronized Surfing Session aufweist,
- mit einem weiteren Datennetz-Server (S) zum Einleiten und Steuern einer Synchronized Surfing Session,
- mit einer ersten (CtC Applet) und einer zweiten (SyS Applet) Anwendung, die zum Ablauf auf einem Datennetzendgerät (D_{A}, D_{B}) vorgesehen sind, die Mittel zur Bereitstellung einer grafischen Bedienoberfläche, Mittel zur Steuerung der Synchronized Surfing Session und der Click-to-Conference Sprachkonferenz und Mittel zur Bereitstellung der Steuerungsmittel angepaßt an die Rolle - Konferenzleiter (A) oder Konferenzteilnehmer (B) - von Nutzern (A, B) aufweisen.
